# EUROPÄISCHE PATENTANMELDUNG

(11) **EP 4 725 296 A1**
(43) Veröffentlichungstag der Anmeldung: **15.04.2026**
(21) Anmeldenummer: 24206511.8
(22) Anmeldetag: 14.10.2024
(51) Int. Cl.: A01G 9/14, A01G 31/06

(54) **REGALLAGER ZUR AUFZUCHT VON PFLANZEN**

(71) Anmelder: Heron Innovations Factory GmbH, 6850 Dornbirn (AT)
(72) Erfinder: Beer, Christian, 6858 Schwarzach (AT)
(74) Vertreter: Riebling, Peter

(57) **Zusammenfassung**

Regallager (17) zur Aufzucht von Pflanzen (25) in Pflanzbehältern (12), wobei ein schienengebundener Transportroboter (1) deckenseitig in dem Regallager (17) fahrbar angeordnet ist und mit einer heb- und senkbar angetriebenen Ladeplattform (10) und mindestens einem darauf angeordneten Längsförderer (15) mindestens einen Pflanzbehälter (6) in Regallagerplätze (12) des Regallagers (17) ein- oder auslagert, wobei mindestens ein Regallagerplatz (12) einen Deckel (22) aufweist, welcher den Pflanzbehälter (6) im Regallagerplatz (12) abdeckt.

## Beschreibung

Die Erfindung betrifft ein Regallager zur Aufzucht von Pflanzen nach dem Oberbegriff des Anspruches 1 und Verfahren zur Aufzucht von Pflanzen in einem Regallager nach den Oberbegriffen der Ansprüche 13 und 14.

Unter dem Begriff vertikale Landwirtschaft (engl. vertical farming) wird die Kultivierung von Pflanzen in geschlossenen Räumen, auf mehreren übereinanderliegenden Etagen unter natürlichem bzw. künstlichem Licht verstanden. Bei den Pflanzen handelt es sich um Nutzpflanzen, wie beispielsweise Obst und Gemüse, welche ganzjährig angebaut und geerntet werden. Dies wird insbesondere durch eine künstliche Beleuchtung, eine Klimasteuerung und eine gesteuerte Nährstoffversorgung erreicht.

Die vertikale Landwirtschaft benötigt deutlich weniger Grundfläche, da die Pflanzen in mehrstöckigen Gebäuden (sogenannten Farmscrapers) angebaut werden, welche nahe an Ballungsgebieten der Städte sind. Dadurch werden lange Transportwege von den Anbaugebieten zu den Verbrauchern vermieden. Weitere Vorteile sind die Steigerung der Nutzpflanzenproduktion, der Schutz vor Witterungseinflüssen, ein ressourcenschonender Anbau, die Wassereinsparung durch geschlossene Wasserkreisläufe, sowie die Nutzung von erneuerbaren Energien. Auf den Einsatz von Pestiziden und Fungiziden kann aufgrund der fehlenden Umwelteinflüsse ebenfalls verzichtet werden.

Ein weiterer, wichtiger Faktor bei der vertikalen Landwirtschaft spielt die Automatisierung, denn die automatisierten Produktionsstätten können nicht nur den Mangel an Feldarbeitskräften ausgleichen, sondern es kann auch 24 Stunden, 7 Tage kostengünstig und ressourcenschonend auf einer geringen Grundfläche frisches Gemüse angebaut und geerntet werden. Zusätzlich bringen Mitarbeiter Verunreinigungen in das System.

Aus dem Stand der Technik sind bereits Transportroboter bekannt, welche für die automatisierte Aufzucht von Pflanzen eingesetzt werden.

Mit der DE 10 2017 121 638 A1 wird ein schienengebundener Transportroboter mit Hubplattform des gleichen Anmelders offenbart, auf welche vollumfänglich Bezug genommen wird. Des Weiteren kann auch ein Transportroboter gemäß der DE 10 2018 109 495 A1 eingesetzt werden, auf welche ebenfalls vollumfänglich Bezug genommen wird.

Der Transportroboter fährt auf einer Schienenbahn, welche aus zwei beabstandeten Schienensträngen besteht, die im deckenseitigen Bereich jeder Regalgasse angeordnet sind. Der schienengebundene Transportroboter ist zweiteilig ausgebildet, wobei der erste Teil des Transportroboters das Fahrwerk für das horizontale Fahren auf Schienen bildet und der zweite Teil eine HubPlattform mit integriertem Lastenaufnahmemittel aufweist. Durch die Anordnung des Transportroboters im deckennahen Bereich kann die darunterliegende Lagerfläche anderweitig genutzt werden. Die Ein- und Auslagerung der Pflanzbehälter erfolgt mit einem Lastaufnahmemittel, welches beispielsweise als mindestens ein Längsförderer mit zwei ausfahrbaren Teleskop-Schlitten ausgebildet ist, die den Behälter unterfahren und mittels Zahnriemen präzise auf den Transportroboter laden. Je nach der Auszugslänge der Hubbänder können dabei mehrere fluchtend untereinander angeordnete Abstellplätze in einem Regallager bedient werden, ohne dass der Transportroboter seine Stellung auf der Schienenbahn verändert. Vorzugsweise können die Teleskop-Schlitten zu beiden Seiten der Hubplattform ausgefahren kann werden. Dadurch ist es möglich einen Pflanzbehälter aus dem Regallagerplatz einer ersten Regalreihe zu entnehmen und in einen Regallagerplatz der gegenüberliegenden zweiten Regalreihe abzusetzen. Dadurch wird ein schneller Umsatz der Pflanzbehälter erreicht.

Die Aufzucht der Pflanzen erfolgt in Pflanzbehältern, welche von Transportrobotern innerhalb eines Regallagers bewegt werden. Das Regallager ist beispielsweise ein Fachbodenregallager oder ein Hochregallager, wobei sich die Pflanzbehälter in vertikal übereinander angeordneten Regallagerplätzen befinden.

Mit der EP 4 252 528 A1 des gleichen Anmelders wird eine Aufzucht von Pflanzen in einem Regallager offenbart. Die Pflanzen befinden sich in Pflanzenträger, welche in Pflanzbehälter einsetzbar sind. Die Pflanzenträger weisen mehrere nebeneinander angeordnete, schlitzförmige, mindestens einseitig offene Aufnahmen auf, in welche die Pflanzen einsetzbar sind. Bei der vorliegenden Ausführungsform werden mehrere unterschiedliche Pflanzenträger verwendet, welche in Pflanzbehälter eingesetzt werden und an das jeweilige Wachstumsstadium der Pflanzen angepasst sind. Am Anfang der Wachstumsphase sind viele, kleine Pflanzen in einem ersten Pflanzenträger. Während der Wachstumsphase werden die Pflanzen von dem ersten Pflanzenträger entnommen und auf zwei neue Pflanzenträger verteilt, wobei die neuen Pflanzenträger weniger Aufnahmen für die Pflanzen aufweisen und damit weniger Pflanzen mehr Platz und mehr Licht zur Verfügung stehen.

Während der Keimphase benötigen die Samen bzw. Pflanzen besondere Voraussetzungen, wie beispielweise besondere klimatische Bedingungen, Lufttemperatur, Feuchtigkeit und/oder besondere Lichtverhältnisse (hell/dunkel). In einem großen Regallager mit einheitlichen Regallagerplätzen für die Pflanzbehälter, einheitlicher Klimatisierung und einheitlicher Luftzufuhr können diese besonderen Voraussetzungen jedoch nicht erreicht werden.

Aufgabe der vorliegenden Erfindung ist es daher ein Regallager zur Aufzucht von Pflanzen bereitzustellen, mit welchem eine Ankeimung der Pflanzen besser möglich ist.

Zur Lösung der gestellten Aufgabe ist die Erfindung durch die technische Lehre des Anspruches 1 und der Ansprüche 12 und 13 gekennzeichnet.

Wesentliches Merkmal der Erfindung ist, dass mindestens ein Regallagerplatz einen Deckel aufweist, welcher den Pflanzbehälter im Regallagerplatz abdeckt.

Durch die Abdeckung des Pflanzbehälters mit einem Deckel entstehen innerhalb des Regallagers abgeschottete Bereiche, welche für die Keimphase der Pflanzen von Vorteil ist.

Die Anordnung des Deckels in dem jeweiligen Regallagerplatz ist ferner mit dem Vorteil verbunden, dass der Deckel stets an Ort und Stelle ist und kein zusätzliches Handling für den Deckel innerhalb des Regallagers benötigt wird.

Die Pflanzbehälter sind mit dem Transportroboter innerhalb des Regallagers bewegbar. Vorzugsweise entnimmt der Transportroboter die Pflanzbehälter aus dem Regallagerfach und Kontrolliert die Pflanzen in dem Pflanzbehälter. Falls es notwendig ist, werden schadhafte Pflanzen aussortiert und zu große Pflanzen separiert. Im Anschluss daran werden die Pflanzenbehälter wieder in einem Regallagerfach eingelagert, bis die Pflanzen erntereif sind.

Innerhalb des Regallagers befinden sich unterschiedliche Regallagerplätze, wie beispielsweise:
- Regallagerplätze mit Deckel, welche während der Keimphase der Pflanzen genutzt werden;
- Regallagerplätze mit Belichtung, welche die Tagphase simulieren;
- Regallagerplätze ohne Belichtung, welche die Nachphase simulieren;

Die oben genannten Regallagerplätze können teilweise auch eine bestimmte Klimatisierung aufweisen.

Durch das Handling der Pflanzbehälter mit dem Transportroboter innerhalb des Regallagers ist es möglich, dass die Pflanzbehälter während der Keimphase in die Regallagerplätze eingelagert werden, welche den erfindungsgemäßen Deckel aufweisen. Während der Keimphase der Pflanzen befinden sich die Pflanzbehälter bei der Aufzucht von Salaten und Microgreens circa zwei Tage in den Regallagerplätzen mit Deckeln. Findet eine Aufzucht von Kräutern statt, so befinden sich die Pflanzbehälter circa 8 bis 12 Tage in den Regallagerplätzen mit Deckel.

Bei einer ersten bevorzugten Ausführungsform ist der Deckel mit einer Führungsvorrichtung in dem Regallagerplatz angeordnet. Vorzugsweise erfolgt eine hängende Anordnung mit der Führungsvorrichtung. Die hängende Anordnung des Deckels mit der Führungsvorrichtung ist mit dem Vorteil verbunden, dass sich der Deckel beabstandet von dem Bodenbereich des Regallagerplatzes befindet und der Pflanzbehälter beim Einlagern in den Regallagerplatz unter den Deckel einschiebbar ist. Zum sicheren Aufsetzen des Deckels auf den Pflanzbehälter werden somit keine zusätzlichen, aktiven Vorrichtungen benötigt, da der Pflanzbehälter mit Hilfe des Transportroboters in das Regallagerfach eingelagert und gleichzeitig unter den Deckel eingeschoben wird. Bei der hängenden Aufhängung des Deckels handelt es sich somit um eine einfache mechanische Vorrichtung, welche keinerlei zusätzliche Energie für einen Antrieb oder eine eigene Steuerung benötigt.

Unter einer Führungsvorrichtung wird eine Vorrichtung verstanden, mit welcher der Deckel beweglich innerhalb des Regallagerplatzes angeordnet ist. Vorzugsweise erfolgt die Anordnung des Deckels mit mindestens einem Freiheitsgrad, so dass der Deckel beim Einlagern des Pflanzbehälters bewegbar ist.

Bei einer bevorzugten Ausführungsform besteht die Führungsvorrichtung aus mindestens einem elastischen Element, welches als Aufhängung zwischen dem Regallagerplatz und dem Deckel ausgebildet ist. Das elastische Element kann beispielsweise eine Feder oder ein Dämpfer sein, welche zwar den Deckeln gegenüber dem Bodenbereich des Regallagerplatzes beabstandet, jedoch beim Einlagern des Pflanzbehälters durch die auftretenden Kräfte sich verformt und beim Auslagern des Pflanzbehälters wieder zurückverformt.

Bei einer weiteren bevorzugten Ausführungsform besteht die Führungsvorrichtung aus zwei Gelenken oder Pendelstäben, welche beim Einlagern des Pflanzbehälters kurzzeitig den Deckel wegschwenken. In der Endposition des Pflanzbehälters wird der Deckel wieder zurückgeschwenkt, so dass sich dieser auf dem Pflanzbehälter befindet.

Unter einem Deckel wird ein loser oder fest aufliegender Verschluss für den Pflanzbehälter verstanden. Der Deckel kann einteilig oder mehrteilig ausgebildet sein und dient als Abdeckung, mit welcher zumindest teilweise der Pflanzbehälter abdeckbar ist. Die Maße des Deckels ist an die abzudeckende Öffnung des Pflanzbehälters angepasst.

Der Deckel kann beispielsweise als Auflagedeckel ausgebildet sein, wodurch er leicht auf den Pflanzbehälter aufsetzbar und wieder lösbar ist. Alternativ weist der Deckel einen profilierten Rand auf, wodurch der Deckel verschiebefrei auf dem Pflanzbehälter aufsetzbar ist. Es ist jedoch auch möglich, dass der Deckel einen Innen- bzw. Klemmrand aufweist, mit welchem eine besonders dichte Abdeckung zwischen dem Deckel und dem Pflanzbehälter erreicht wird.

Der Deckel besteht beispielsweise aus Kunststoff und ist lebensmittelecht, robust, langlebig, schlagfest und leicht zu reinigen. Selbstverständlich kann der Deckel auch aus einem anderen Material, wie z.B. einem biokompatiblen Werkstoff, Holz oder Metall bestehen.

Bei einer bevorzugten Ausführungsform weist der Deckel mindestens ein Klimaelement auf, welches den Innenraum des Pflanzbehälters klimatisiert. Das Klimaelement kann entweder fest oder lösbar mit dem Deckel verbunden sein. Das Klimaelement kann beispielsweise als ein Kühlpack, ein Kühlakku, ein Kühlelement, ein Heizelement, ein Latentwärmespeicher oder ein Thermoelement ausgebildet sein.

Unter einem Pflanzbehälter werden sämtliche Behälterformen, Gefäße oder Kasten, verstanden, welche zur Aufzucht von Pflanzen geeignet sind. Vorzugsweise sollte der Pflanzbehälter so ausgebildet sein, dass er eine Nährstofflösung aufnehmen kann und gleichzeitig eine Halterung für einen Pflanzenträger bildet.

Der Pflanzbehälter besteht beispielsweise aus einem (lebensmittelechten) Kunststoff oder einem Metallwerkstoff bzw. Naturwerkstoff. Der Behälter sollte UVbeständig und einen Korrosionsschutz aufweisen. Des Weiteren sollte der Behälter waschbar ausgebildet sein, so dass er mehrmals verwendet werden kann.

Bei einer bevorzugten Ausführungsform ist der Pflanzbehälter als einseitig offener, durch umlaufende, randseitige Wände abgegrenzter transportabler Pflanzbehälter ausgebildet, in dessen Innenraum mindestens eine Pflanze einsetzbar ist. Vorzugsweise befindet sich im Bodenraum des Pflanzbehälters eine Nährstofflösung zur Aufzucht der Pflanzen. Der Bodenraum ist nach oben durch den Pflanzenträger mindestens teilweise abgedeckt. Der Pflanzenträger ist in dem Innenraum des Pflanzbehälters angeordnet. Dies bedeutet, dass der Pflanzenträger in dem Innenraum des Pflanzbehälters eingesetzt oder auch wieder aus dem Pflanzbehälter (automatisiert) entnommen werden kann.

Bei einer weiteren bevorzugten Ausführungsform befindet sich im Bodenbereich des Pflanzbehälters ein Hydro-Aero-System, welches aus einem Wasserreservoir und einem Ultraschallvernebler besteht. Am Boden des Behälters befindet sich beispielsweise ein 3cm hohes Wasser-Nährstoffgemisch und darüber ein Nebel-Luft-Gemisch, welches von dem Ultraschallvernebler erzeugt wird.

Neben dem Regallager wird zusätzlich ein Schutz für ein Verfahren zur Aufzucht von Pflanzen in Pflanzbehältern in einem Regallager beansprucht, wobei ein schienengebundener Transportroboter deckenseitig in dem Regallager fahrbar angeordnet ist und mit einer heb- und senkbar angetriebenen Ladeplattform und mindestens einem darauf angeordneten Längsförderer mindestens einen Pflanzbehälter in Regallagerplätze des Regallagers ein- oder auslagert, wobei beim Einlagern folgende Verfahrensschritte umgesetzt werden:
- Positionieren der Ladeplattform des Transportportroboters in Gegenüberstellung eines Regallagerplatzes, wobei der Regallagerplatz einen Deckel aufweist, welcher hängt innerhalb des Regallagerplatzes angeordnet ist;
- Einlagern des Pflanzbehälters in den Regallagerplatz, wobei der Transportroboter mit seinen Längsförderern den Pflanzbehälter unter den Deckel einschiebt bis der Deckel vollständig auf dem Pflanzbehälter aufliegt.

Danach kann der Transportroboter mit seiner Ladeplattform zum nächsten Regallagerplatz fahren, um dort einen neuen Pflanzbehälter auszulagern.

Zusätzlich wird ein Verfahren zur Aufzucht von Pflanzen in Pflanzbehälter in einem Regallager beansprucht, wobei beim Auslagern des Pflanzbehälters folgende Verfahrensschritte umgesetzt werden:
- Positionieren der Ladeplattform des Transportportroboters in Gegenüberstellung eines Regallagerplatzes, wobei der Regallagerplatz einen Deckel aufweist, welcher auf dem Pflanzbehälter aufliegt;
- Auslagern des Pflanzbehälters aus dem Regallagerplatz, wobei der Transportroboter mit seinen Längsförderern den Pflanzbehälter unter dem Deckel rauszieht bis der Deckel vollständig von dem Pflanzbehälter entfernt ist.

Nachdem Aufnehmen des Pflanzbehälters auf der Ladeplattform fährt der Transportroboter zu einem neuen Regallagerplatz, um dort den Pflanzbehälter einzulagern.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schienengebundener Transportroboter gemäß dem Stand der Technik
- Figur 2:: Regallager mit einem schienengebundenen Transportroboter gemäß dem Stand der Technik
- Figur 3:: schematische Vorderansicht auf das erfindungsgemäße Regallager mit einem Regallagerplatz mit einem Deckel
- Figur 4:: schematische Darstellung des Regallagerplatzes mit Deckel mit einem ausgezogenen Pflanzbehälter
- Figur 5:: schematische Darstellung des Regallagerplatzes mit einem Pflanzbehälter mit aufgesetztem Deckel
- Figur 6:: schematische Darstellung des Regallagerplatz mit beanstandeten Pflanzbehälter
- Figur 7:: schematische Darstellung des Regallagerplatz mit angesetzten Pflanzbehälter
- Figur 8:: schematische Darstellung des Regallagerplatzes mit teilweise eingelagerten Pflanzbehälter
- Figur 9:: schematische Darstellung des Regallagerplatz mit eingelagerten, abgedecktem Pflanzbehälter

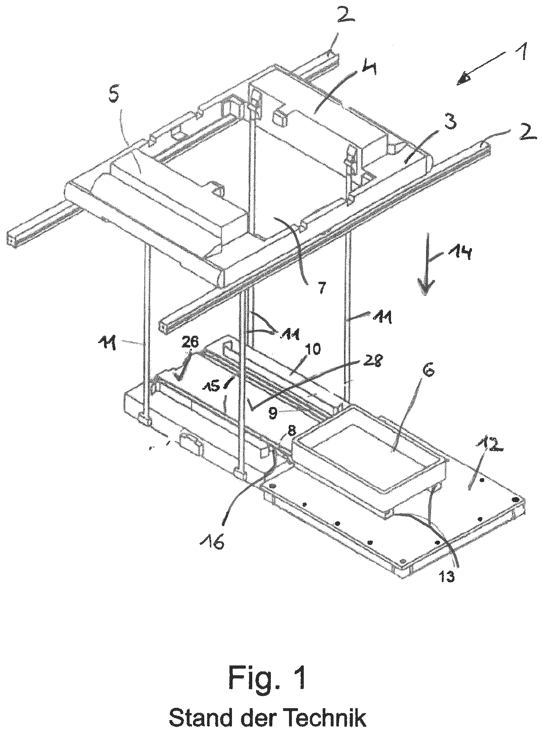

Mit der Figur 1 wird ein Transportroboter 1 gemäß dem Stand der Technik gezeigt, wie er in einem Regallager 17 zur Aufzucht von Pflanzen eingesetzt werden kann. Bei dem Transportroboter 1 handelt es sich um einen Transportroboter, wie er mit der DE 10 2017 121 638 A1 offenbart wird, auf welche vollumfänglich Bezug genommen.

Der Transportroboter 1 ist in Längsrichtung verfahrbar angetrieben und befindet sich auf einer Schienenbahn 2, die aus zwei zueinander beabstandeten und parallel verlaufenden Profilschienen besteht. Die Antriebsräder sind nicht dargestellt. Der Transportroboter 1 weist ein Gehäuse 3 auf, welches in seinem Mittenbereich eine Ausnehmung 7 aufweist, in der mit Bewegungsspiel eine heb- und senkbar ausgebildete Ladeplattform 10 angeordnet ist.

Es sind zwei einander gegenüberliegende Hubantriebskästen 4, 5 vorgesehen. In jedem Hubantriebskasten 4, 5 ist ein Hubmotor angeordnet, der über einen Antriebsriemen eine Antriebswelle antreibt, die drehfest mit zwei gegenüberliegend angeordneten Wickeltrommeln verbunden ist. Jeweils ein Hubband 11 ist über jede Wickeltrommel gewickelt.

Bei einem synchronen Antrieb der Hubmotoren wird die Ladeplattform 10 gemäß Fig. 1 in vertikaler Richtung in Pfeilrichtung 14 abgesenkt und kann in Gegenüberstellung zu einem Regellagerplatz 12 gebracht werden, der eine horizontale (oder schräg geneigte) Ablageebene ausbildet.

Auf der Ablageebene des Regallagerplatzes 12 sind zwei zueinander parallele Ablagepaneele 13 angeordnet, in deren Hohlprofil die beiden Förderbänder 8, 9 des Längsförderers 15 hineinfahren. Der Längsförderer 15 ist bevorzugt ein Teleskopschlitten 16, der mit teleskopartig ausfahrbaren förderbandartigen Ladegabeln in der Lage ist, in seitlicher horizontaler Richtung über den Außenumriss der Ladeplattform 10 hinaus fahren zu können, um ein neben der Ladeplattform 10 auf einem Regallagerplatz 12 gelagerten Pflanzbehälter 6 zu unterfahren und aufzunehmen. Dabei sind die teleskopartig ausfahrbaren Ladegabeln als angetriebene Förderbänder 8, 9 ausgebildet, die auf einem Teleskopschlitten 16 angeordnet sind, welche bei ausgefahrenen Teleskopschlitten 16 in der Lage sind, das Ladegut (Pflanzbehälter 6) bodenseitig zu unterfahren und sich an die Bodenseite des Pflanzbehälters 6 anzulegen.

Gemäß der Figur 1 findet eine seitliche Abladung oder Aufladung eines Pflanzbehälters 6 in einem Regallagerplatz 12 statt. Es ist erkennbar, dass die Ladeplattform 10 auf die Ablageebene des Regallagerplatzes 12 abgesenkt ist und die Förderbänder 8, 9, die in einem verschiebbar angetriebenen Längsförderer angeordnet sind, in die auf dem Regallagerplatz 12 angeordneten Ablagepaneele 13 hinein fahrbar sind, wobei die beiden Förderbänder 8, 9 den Pflanzbehälter 6 bodenseitig untergreifen.

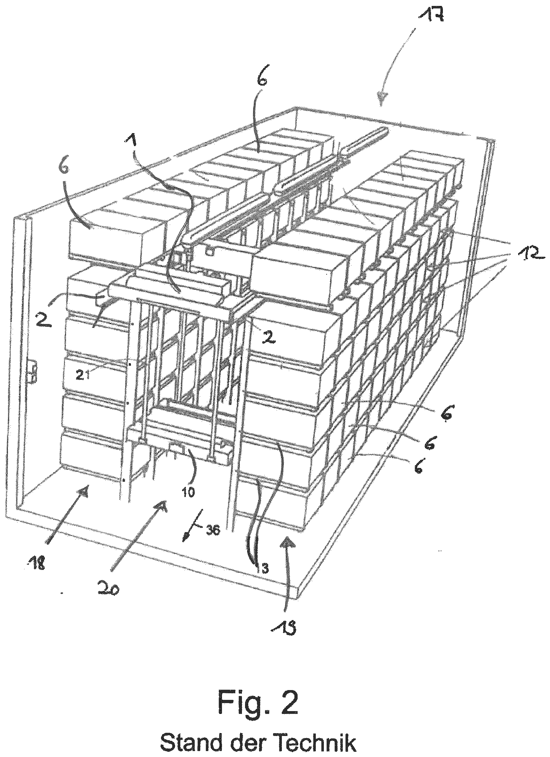

Mit der Figur 2 wird ein Regallager 17 gemäß dem Stand der Technik gezeigt. Das Regallager 17 besteht aus einer ersten Regalreihe 18 und einer zweite Regalreihe 19. Die beiden Regalreihen 18, 19 sind beabstandet voneinander angeordnet, wobei sich dazwischen eine Regalgasse 20 erstreckt. In der Regalgasse 20 ist deckenseitig ein Transportroboter 1 angeordnet, welcher auf einer Schienenbahn 2 fährt, wobei eine erste Schiene der ersten Regalreihe 18 und eine zweite Schiene der zweiten Regalreihe 19 zugeordnet ist. Die Regalreihen 18 und 19 weisen sechs Regalplätze 12 in vertikaler Richtung und elf Regallagerplätze 12 in horizontaler Richtung auf. Alle Regallagerplätze 12 sind gleich groß ausgebildet.

Die Regallagerplätze 12 werden durch Ablagepaneele 13 gebildet, auf welchen die Pflanzbehälter 6 aufliegen, so dass jeder Pflanzbehälter 6 von dem darüber und daneben angeordneten Pflanzbehälter 6 beabstandet ist. Auf diese Weise ergibt sich die Möglichkeit, dass der Transportroboters 2 in der Regalgasse 20 jeden beliebigen Pflanzbehälter 6 in jeder beliebigen Regalreihe 18, 19 und Regalspalte seitlich untergreifen und auf seine Ladeplattform 10 aufladen kann.

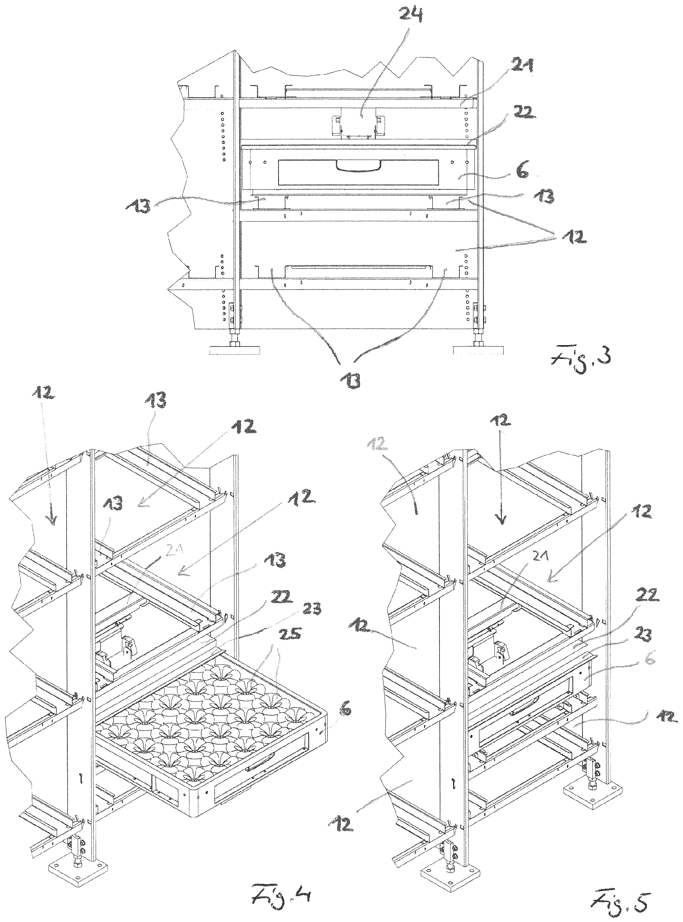

Mit der Figur 3 wird ein Ausschnitt des Regallagers 17 mit mehreren Regallagerplätzen 12 gezeigt. In einem der Regallagerplätze 12 ist ein Pflanzbehälter 6 eingelagert, wobei sich auf dem Pflanzbehälter 6 ein Deckel 22 befindet. Der Deckel 22 ist mit einer Führungsvorrichtung 24 an dem Regallagerplatz 12 angeordnet. Die Anordnung der Führungsvorrichtung 24 erfolgt mit einer Aufhängung 21 an den darüber befindlichen Ablagepanelen 13.

Figur 4 zeigt ebenfalls einen Ausschnitt des Regallagers 12, wobei sich ein Pflanzbehälter 6 teilweise in einem Regallagerplatz 12 befindet. Der Regallagerplatz 12 weist einen Deckel 22 auf, welche mit einer Führungsvorrichtung 24 mit den darüber liegenden Ablagepanelen 13 verbunden ist. An dieser Stelle wird angemerkt, dass die Führungsvorrichtung 24 selbstverständlich auch an anderen Teilen des Regallagers 17 befestigt werden kann.

Die Maße des Deckels 22 entsprechend den Abmessungen des Pflanzbehälters 6, so dass der Deckel 22 den Pflanzbehälter 6 komplett abdecken kann. Durch die Abdeckung des Pflanzbehälters 6 mit dem Deckel 22 entsteht ein besonderes Klima innerhalb des Pflanzbehälters 6, welches vorteilhaft für die Keimung der Pflanzen 25 ist.

Der Deckel 22 hat an einer Seite eine Einführschräge 23, welche ein Unterschieben des Pflanzbehälters 6 unter den Deckel 22 erleichtert. Vorzugsweise befindet sich die Einführschräge 23 im Randbereich des Deckels 22 und ist leicht nach oben gebogen.

Figur 5 zeigt den Pflanzbehälter 6, welcher vollständig in das Regallagerfach 12 eingeschoben ist, wobei sich der Deckel 22 auf dem Pflanzbehälter 6 befindet. Der Pflanzbehälter 6 ist mit dem Deckel 22 abgedeckt.

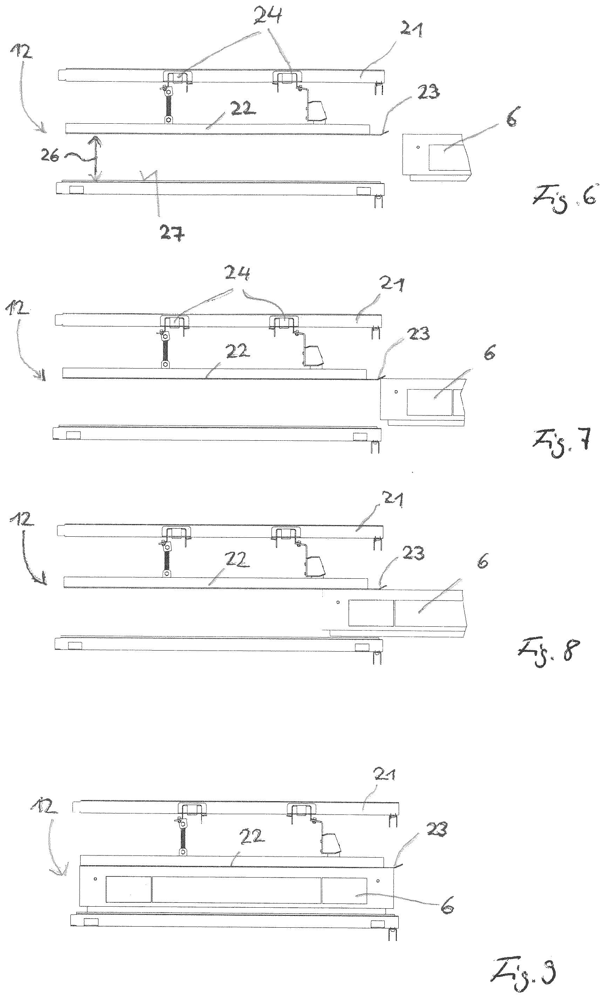

Mit den Figur 6, 7, 8 und 9 wird das Einlagern eines Pflanzbehälters 6 in ein Regallagerfach 12 gezeigt.

Bei der Figur 6 befindet sich der Pflanzbehälter 6 vor dem Regallagerfach 12. Der Deckel 22 ist innerhalb des Regallagerfachs 12 angeordnet. Die Anordnung erfolgt mit einer Führungsvorrichtung 24, welche eine hängende Verbindung zwischen dem Deckel 22 und der Aufhängung 21 herstellt.

Die Führungsvorrichtung 24 besteht aus zwei Gelenken, welche beabstandet voneinander an der Oberseite des Deckels 22 angeordnet sind. Die Gelenke bewirken, dass der Deckel 22 beweglich aufgehängt ist und dadurch ein Aufsetzen des Deckels 22 auf dem Pflanzbehälter 6 erfolgen kann.

Der Deckel 22 ist mit einem Abstand 26 gegenüber dem Bodenbereich 27 des Regallagerplatzes 12 angeordnet. Vorzugsweise ist der Abstand 26 geringer als die Höhe des Pflanzbehälters 6, wobei in der vollständig eingelagerten Position des Pflanzbehälters 6 der Deckel 22 vollständig auf dem Pflanzbehälter 6 aufliegt.

Gemäß der Figur 7 wurde der Pflanzbehälter 6 weiter in Richtung des Regallagerfaches 12 bewegt, wobei der obere Randbereich des Pflanzbehälters 6 mit der Einführschräge 23 des Deckels 22 in Kontakt ist. Die Einführschräge 23 ist leicht nach oben gebogen, was ein Unterfahren des Pflanzbehälters 6 unter den Deckel 22 erleichtert.

Figur 8 zeigt den Pflanzbehälter 6, welcher weiter in das Regallagerfach 12 bewegt wurde, wobei der Deckel 22 bereits teilweise auf dem Pflanzbehälter 6 aufliegt.

Mit der Figur 9 wird die endgültige, eingelagerte Position des Pflanzbehälters 6 in dem Regallagerfach 12 gezeigt. Der Deckel 22 befindet sich auf dem Pflanzbehälter 6 und deckt diesen ab.

### Zeichnungslegende

- 1.: Transportroboter
- 2.: Schienenbahn
- 3.: Gehäuse
- 4.: Hubantriebskasten
- 5.: Hubantriebskasten
- 6.: Pflanzbehälter
- 7.: Ausnehmung (von 2)
- 8.: Förderband
- 9.: Förderband
- 10.: Ladeplattform
- 11.: Hubband
- 12.: Regallagerplatz
- 13.: Ablagepanelle
- 14.: Pfeilrichtung
- 15.: Längsförderer
- 16.: Teleskopschlitten
- 17.: Regallager
- 18.: Regalreihe (links)
- 19.: Regalreihe (rechts)
- 20.: Regalgasse (mitte)
- 21.: Aufhängung für 24
- 22.: Deckel für 6
- 23.: Einführschräge von 22
- 24.: Führungsvorrichtung für 22
- 25.: Pflanzen
- 26.: Abstand
- 27.: Bodenbereich

## Patentansprüche

1. Regallager (17) zur Aufzucht von Pflanzen (25) in Pflanzbehältern (12), wobei ein schienengebundener Transportroboter (1) deckenseitig in dem Regallager (17) fahrbar angeordnet ist und mit einer heb- und senkbar angetriebenen Ladeplattform (10) und mindestens einem darauf angeordneten Längsförderer (15) mindestens einen Pflanzbehälter (6) in Regallagerplätze (12) des Regallagers (17) ein- oder auslagert, **dadurch gekennzeichnet, dass** mindestens ein Regallagerplatz (12) einen Deckel (22) aufweist, welcher den Pflanzbehälter (6) im Regallagerplatz (12) abdeckt.

2. Regallager (17) nach Anspruch 1, **dadurch gekennzeichnet, dass** der Deckel (22) mit einer Führungsvorrichtung (24) beweglich innerhalb des Regallagerplatzes (12) angeordnet ist.

3. Regallager (17) nach Anspruch 2, **dadurch gekennzeichnet, dass** die Führungsvorrichtung (24) mindestens ein elastisches Element aufweist, welches eine Aufhängung für den Deckel (22) innerhalb des Regallagerplatzes (12) bildet.

4. Regallager (17) nach Anspruch 3, **dadurch gekennzeichnet, dass** das elastische Element eine Feder oder ein Dämpfer ist.

5. Regallager (17) nach Anspruch 2, **dadurch gekennzeichnet, dass** die Führungsvorrichtung (24) mindestens ein Gelenk aufweist, welches eine Aufhängung für den Deckel (22) innerhalb des Regallagerplatzes (12) bildet.

6. Regallager (17) nach einem der Ansprüche 1 bis 5, **dadurch gekennzeichnet, dass** der Deckel (22) mit einem Abstand (26) gegenüber dem Bodenbereich (27) des Regallagerplatzes (12) hängend angeordnet ist und der Pflanzbehälter (6) beim Einlagern in den Regallagerplatz (12) unter den Deckel (22) einschiebbar ist.

7. Regallager (17) nach einem der Ansprüche 1 bis 6, **dadurch gekennzeichnet, dass** der Deckel (22) an den Pflanzbehälter (6) angepasst ist.

8. Regallager (17) nach einem der Ansprüche 1 bis 7, **dadurch gekennzeichnet, dass** der Deckel (22) aus einem Kunststoffmaterial besteht.

9. Regallager (17) nach einem der Ansprüche 1 bis 8, **dadurch gekennzeichnet, dass** der Deckel (22) mindestens eine Einführschräge (23) aufweist, wodurch der Pflanzbehälter (6) leicht unter den Deckel (22) einschiebbar ist.

10. Regallager (17) nach einem der Ansprüche 1 bis 9, **dadurch gekennzeichnet, dass** der Pflanzbehälter (6) umlaufende, randseitige Wände aufweist und einseitig offen ist.

11. Regallager (17) nach einem der Ansprüche 1 bis 10, **dadurch gekennzeichnet, dass** in dem Pflanzbehälter (6) mindestens ein Pflanzenträger angeordnet ist, in welchen mindestens eine Pflanze (25) einsetzbar ist.

12. Regallager (17) nach einem der Ansprüche 1 bis 11, **dadurch gekennzeichnet, dass** der Deckel (22) mindestens ein Klimaelement aufweist, welches den Innenraum des Pflanzbehälters (6) klimatisiert

13. Verfahren zur Aufzucht von Pflanzen (25) in Pflanzbehälter (6) in einem Regallager (17), wobei ein schienengebundener Transportroboter (1) deckenseitig in dem Regallager (17) fahrbar angeordnet ist und mit einer heb- und senkbar angetriebenen Ladeplattform (10) und mindestens einem darauf angeordneten Längsförderer (15) mindestens einen Pflanzbehälter (6) in Regallagerplätze (12) des Regallagers (17) ein- oder auslagert, **gekennzeichnet durch folgende Verfahrensschritte:**
13.1 Positionieren der Ladeplattform (10) des Transportportroboters (1) in Gegenüberstellung eines Regallagerplatzes (12), wobei der Regallagerplatz (12) einen Deckel (22) aufweist, welcher hängt innerhalb des Regallagerplatzes (12) angeordnet ist;
13.2 Einlagern des Pflanzbehälters (6) in den Regallagerplatz (12), wobei der Transportroboter (1) mit seinen Längsförderern (15) den Pflanzbehälter (6) unter den Deckel (22) einschiebt bis der Deckel (22) vollständig auf dem Pflanzbehälter (6) aufliegt.

14. Verfahren zur Aufzucht von Pflanzen (25) in Pflanzbehälter (6) in einem Regallager (17), wobei ein schienengebundener Transportroboter (1) deckenseitig in dem Regallager (17) fahrbar angeordnet ist und mit einer heb- und senkbar angetriebenen Ladeplattform (10) und mindestens einem darauf angeordneten Längsförderer (15) mindestens einen Pflanzbehälter (6) in Regallagerplätze (12) des Regallagers (17) ein- oder auslagert, **gekennzeichnet durch folgende Verfahrensschritte:**
14.1 Positionieren der Ladeplattform (10) des Transportportroboters (1) in Gegenüberstellung eines Regallagerplatzes (12), wobei der Regallagerplatz (12) einen Deckel (22) aufweist, welcher auf dem Pflanzbehälter (6) aufliegt;
14.2 Auslagern des Pflanzbehälters (6) aus dem Regallagerplatz (12), wobei der Transportroboter (1) mit seinen Längsförderern (15) den Pflanzbehälter (6) unter dem Deckel (22) rauszieht bis der Deckel (22) vollständig von dem Pflanzbehälter (6) entfernt ist.
